# EUROPÄISCHE PATENTSCHRIFT

(11) **EP 0 564 697 B1**
(45) Veröffentlichungstag und Bekanntmachung des Hinweises auf die Patenterteilung: **21.01.1998**
(21) Anmeldenummer: 92117682.2
(22) Anmeldetag: 16.10.1992
(51) Int. Cl.: H04Q 7/20

(54) **Mobilfunktelefonnetz mit wahlweise fehlergeschützter Sprach- oder Datenübertragung**
Mobile radio network with alternative error protected voice or data transmission
Réseau radio mobile avec transmission au choix de parole ou de données protégées contre les erreurs

(30) Priorität: 31.03.1992 DE 4210489
(43) Veröffentlichungstag der Anmeldung: 13.10.1993
(73) Patentinhaber: ROBERT BOSCH GMBH, 70442 Stuttgart (DE)
(72) Erfinder: Liebsch, Guntram, Dr.-Ing., W-1000 Berlin 42 (DE)

(56) Entgegenhaltungen:
- EP-A- 0 473 297
- WO-A-91/07044
- US-A- 4 697 281

## Beschreibung

Die Erfindung geht von einem Verfahren nach dem Oberbegriff des Anspruchs 1 aus.

Es ist ein mit GSM (Groupe Spécial Mobile) bezeichnetes Verfahren bekannt, nach welchem die Sprache nach einer Digitalisierung mit einer Übertragungsrate von 13 kbit/s übertragen wird. Die digitalisierten Sprachsignale werden zu Blöcken von je zwei 20 ms mit 260 bit zusammengefaßt. Von diesen 260 bit werden 182 bit mit Fehlerschutz und die restlichen 78 bit ohne Fehlerschutz übertragen. Ein derartiges Verfahren wird bei dem europäischen digitalen Mobiltelefonnetz angewendet. Sollen bei dem bekannten Verfahren zusätzlich externe Daten, zum Beispiel Daten eines Personal Computers, übertragen werden, so muß dazu ein separater, hardewaremäßig aufwendig zu realisierender und mit einem eigenen Fehlerschutz versehener übertragungskanal bereitgestellt werden. Unter einem Übertragungskanal sei hier ein definiertes digitales Datenformat verstanden im Unterschied zu dem Kommunikationskanal zwischen zwei Sende- und Empfangsstationen. Eine Nachrüstmöglichkeit bekannter Sende- und Empfangsstationen auf die wahlweise Übertragung von digitalisierter Sprache oder Daten ist nicht gegeben.

Aus der EP-A-0 473 297 ist zum Beispiel eine Mobilstation mit integriertem Datenübertragungsteil bekannt.

Der Erfindung liegt die Aufgabe zugrunde, ein Verfahren nach dem Oberbegriff des Anspruchs 1 derart weiterzubilden, daß die wahlweise an Stelle der digitalen Sprachübertragung durchzuführende fehlergeschützte Übertragung externer Daten möglich ist, ohne daß es dazu eines zusätzlichen, im GSM-System definierten Übertragungskanals oder eines erheblichen Eingriffs in das bestehende GSM-System bzw. in die Sende- und Empfangsstationen bedarf.

Diese Aufgabe wird durch ein Verfahren mit den Merkmalen des Anspruchs 1 gelöst. Das Verfahren hat den Vorteil, daß kein zusätzlicher Datenkanal erforderlich ist und daß trotzdem ein ausreichender Fehlerschutz bei der Übertragung der externen Daten gewährleistet werden kann. Vorteilhafte Weiterbildungen der Erfindung ergeben sich aus den Unteransprüchen.

Ausführungsbeispiele der Erfindung sind in der Zeichnung an Hand mehrerer Figuren dargestellt und werden im folgenden näher erläutert. Es zeigen
- Fig. 1 A bis 1 D: Signalverläufe an Schaltungspunkten A bis D in Fig. 2,
- Fig. 2: ein vereinfachtes Blockschaltbild einer bekannten Übertragungsanordnung für digitale Sprachsignale,
- Fig. 3 E bis 3 J: Signalverläufe an Schaltungspunkten E bis J in Fig. 4 und
- Fig. 4: ein vereinfachtes Blockschaltbild einer erfindungsgemäßen Sprach-Datenübertragungsanordnung.

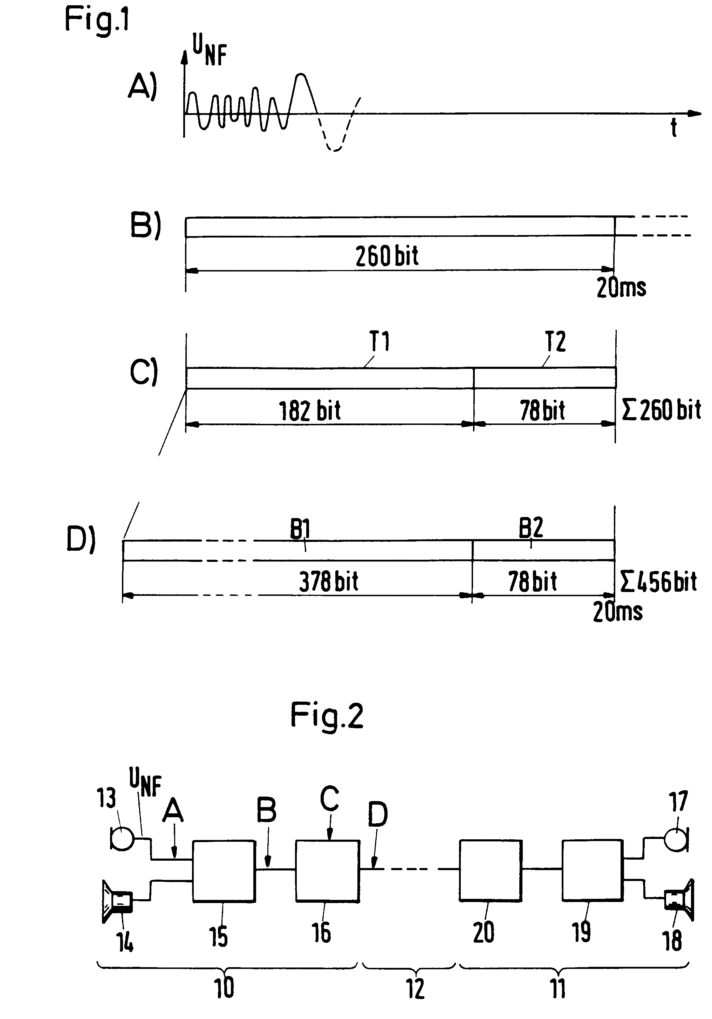

An Hand der Fig. 1 A bis 1 D und 2 wird das bekannte Verfahren zur digitalen Sprachübertragung nach dem GSM-System erläutert. In Fig. 2 bezeichnet 10 eine erste Sende- und Empfangsstation und 11 eine zweite Sende- und Empfangsstation, die mit der ersten Sende- und Empfangsstation 10 über eine Kommunikationsstrecke 12, das ist vorzugsweise eine Funkstrecke, verbunden ist. Die erste Sende- und Empfangsstation 10 enthält ein erstes Mikrofon 13, einen ersten Lautsprecher 14, einen ersten Sprachkodierer und -dekodierer 15 (Speech Codec) und eine erste Fehlerschutzeinrichtung 16.

In entsprechender Weise ist die zweite Sende- und Empfangsstation 11 mit einem zweiten Mikrofon 17, einem zweiten Lautsprecher 18, einem zweiten Sprachkodierer und -dekodierer 19 und einer zweiten Fehlerschutzeinrichtung 20 versehen.

Die Wirkungsweise der Schaltungsanordnung nach Fig. 2 ist folgende.

Wird das erste Mikrofon 13 der ersten Sende- und Empfangsstation 10 besprochen, dann liefert es an den ersten Sprachkodierer und -dekodierer 15 eine niederfrequente Wechselspannung U_{NF}; vgl. Fig. 1 A. Der erste Sprachkodierer und -dekodierer 15 wandelt die Wechselspannung U_{NF} in 20 ms lange Datenblöcke von je 260 bit um; vgl. Fig. 1 B. In der ersten Fehlerschutzeinrichtung 16 wird der Datenblock nach Fig. 1 B in zwei Bereiche T1, T2 (Fig. 1 C) aufgeteilt, von denen der erste Bereich T1 182 bit und der zweite Bereich T2 78 bit umfaßt. Der erste Bereich T1 wird in der ersten Fehlerschutzeinrichtung 16 einem Fehlerschutz unterworfen, durch den er auf 378 bit vergrößert wird. Der zweite Bereich T2 des Datenblocks nach Fig. 1 C erhält keinen Fehlerschutz; vgl. Fig. 1 D, Bereiche B1 und B2. Die Übertragungsrate steigt somit auf 456 bit pro 20 ms bzw. auf 22,8 kbit/s. Mit dieser Übertragungsrate werden die nur in den Bereichen B1 geschützten Datenblöcke über die Kommunikationsstrecke 12 zu der zweiten Sende- und Empfangsstation 11 übertragen, in welcher die ankommenden Datenblöcke ausgewertet und in ein akustisches Signal umgewandelt werden, das der zweite Lautsprecher 18 wiedergibt.

In umgekehrter Richtung wird eine in das zweite Mikrofon 17 der zweiten Sende- und Empfangsstation 11 gesprochene Nachricht über den zweiten Sprachkodierer und -dekodierer 19 und die zweite Fehlerschutzeinrichtung 20 geführt und über die Kommunikationsstrecke 12 zu der ersten Sende- und Empfangsstation 10 übertragen. Dort wird sie wieder in mit dem ersten Lautsprecher 14 hörbare Signale umgewandelt.

Nach dem erfindungsgemäßen Verfahren können nun wahlweise digitale Sprachsignale oder externe Daten durch Datenblöcke, deren Aufbau dem Aufbau der Datenblöcke gemäß Fig. 1 D entsprechen, übertragen werden. Hierzu werden eine erste Sende- und Empfangsstation 10' (vgl. Fig. 4) und eine der Übersichtlichkeit halber nur symbolisch angedeutete, identisch aufgebaute zweite Sende- und Empfangsstation 11' durch je ein Datenteil 30 ergänzt. Zu dem Datenteil 30 gehören ein Umschalter 31 und eine weitere Fehlerschutzeinrichtung 32. Eine externe Datenquelle 33 (zum Beispiel PC) versorgt den Datenteil 30 mit digitalen Daten, die über eine Kommunikationsstrecke 12' übertragen werden sollen. Der Umschalter 31 verbindet wahlweise die erste Fehlerschutzeinrichtung 16 mit dem ersten Sprachkodierer und -dekodierer 15 oder mit der weiteren Fehlerschutzeinrichtung 32. In einer ersten Schaltstellung des Umschalters 31, das ist vorzugsweise ein elektronischer Umschalter, verbindet dieser, wie in Fig. 4 gezeigt, den ersten Sprachkodierer und -dekodierer 15 mit der ersten Fehlerschutzeinrichtung 16. Damit arbeitet die erste Sende- und Empfangsstation 10' genauso wie die erste Sende- und Empfangsstation 10 nach Fig. 2. In analoger Weise ist auch die zweite Sende- und Empfangsstation 11' durch ein Datenteil aus Umschalter, Fehlerschutzeinrichtung und Datenquelle ergänzt.

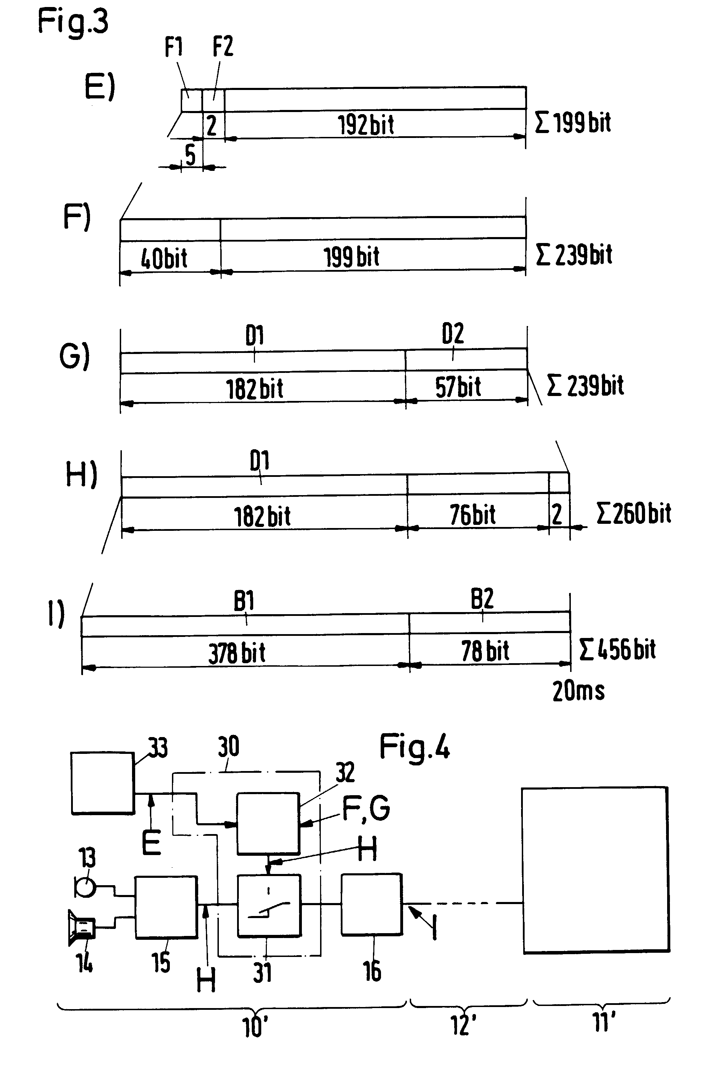

Befindet sich der Umschalter 31 der ersten Sende- und Empfangsstation 10' in der Schaltstellung, in der er die weitere Fehlerschutzeinrichtung 32 mit der ersten Fehlerschutzeinrichtung 16 verbindet, so gelangen die von der Datenquelle 33 an ihrem Ausgang abgegebenen Datenblöcke gemäß Fig. 3 E über die weitere Fehlerschutzeinrichtung 32 und den Umschalter 31 an die erste Fehlerschutzeinrichtung 16. Ein Datenblock beginnt gemäß Fig. 3 E mit zwei Zusatzinformationen F1, F2, von denen die erste, fünf bit umfassende Zusatzinformation F1 zur Kennzeichnung der Zahl der zu übertragenden Datenblöcke pro Zeiteinheit und die zweite, zwei bit umfassende Zusatzinformation F2 als für die zweite Sende- und Empfangsstation bestimmte Unterscheidung von Sprach- und Datenübertragung dient. An die Zusatzinformationen F1 und F2 schließen sich 192 bit externer Daten an.

In der weiteren Fehlerschutzeinrichtung 32 werden die Datenblöcke gemäß Fig. 3 E einem ersten Fehlerschutz unterworfen; vgl. Fig. 3 F, der vorzugsweise durch einen 40 bit umfassenden, unter der Bezeichnung fire code bekannten Kode gebildet wird. Gleichzeitig werden in der weiteren Fehlerschutzeinrichtung 32 182 bit so in den 260-bit-Datenstrom gemäß Fig. 1 C eingeblendet, daß sie mit dem Faltungskode aus dem GSM-System behandelt werden; vgl. Fig. 3 G, erster Bereich D1.

Die restlichen 57 bit (vgl. Fig. 3 G, zweiter Bereich D2) werden zum Beispiel mit einem anderen Faltungskode versehen und direkt in die nicht fehlergeschützten 78 bit (davon zwei Leerbits) eingeblendet; vgl. Fig. 3 H. Am Ausgang der ersten Sende- und Empfangsstation 10' liegt dann ein vollständig fehlergeschützter Datenblock gemäß Fig. 3 J vor, der in der Übertragungsrate dem Sprach-Datenblock in Fig. 1 D entspricht.

## Patentansprüche

1. Verfahren zum Übertragen von digitalisierten, in einem ersten Bereich (B1) fehlergeschützten und einem zweiten Bereich (B2) nicht fehlergeschützten Sprachsignalen über einen Sprachkanal definierter Bitrate, **dadurch gekennzeichnet**, daß zum wahlweisen Übertragen von externen digitalen Daten über den Sprachkanal vor der Datenübertragung alle externen Daten einem ersten Fehlerschutzkode unterworfen werden (F) und daß ein erster fehlergeschützter Datenteil (D1), mit einem zusätzlichen zweiten Fehlerschutzkode versehen, in den ersten Bereich (B1) und ein zweiter fehlergeschützter Datenteil (D2), mit einem dritten zusätzlichen Fehlerschutzkode versehen, in den zweiten Bereich (B2) an die Stelle der Sprachsignale bitsynchron eingespeist werden.

2. Verfahren nach Anspruch 1, dadurch gekennzeichnet, daß die externen Daten in Form von Datenblöcken vorliegen und daß die Zahl der Datenblöcke pro Zeiteinheit in Form einer Zusatzinformation (F1) zu den externen Daten fehlergeschützt übertragen wird.

3. Verfahren nach Anspruch 1 oder 2, dadurch gekennzeichnet, daß in einer weiteren Zusatzinformation (F2) die Betriebsart fehlergeschützt übertragen wird.

## Claims

1. Method for the transmission of digitized voice signals, which are error-protected in a first area (B1) and are non-error-protected in a second area (B2) via a voice channel having a defined bit rate, characterized in that, for the purpose of optionally transmitting external digital data via the voice channel, all the external data are subjected (F) to a first error protection code prior to the data transmission, and in that a first error-protected data section (D1), provided with an additional, second error protection code, is fed in a bit-synchronous manner into the first area (B1) in the place of the voice signals, and a second error-protected data section (D2), provided with a third additional error protection code, is fed in a bit-synchronous manner into the second area (B2) in the place of the voice signals.

2. Method according to Claim 1, characterized in that the external data are present in the form of data blocks, and in that the number of data blocks per unit time is transmitted in an error-protected manner in the form of an additional information item (F1) supplementing the external data.

3. Method according to Claim 1 or 2, characterized in that the operating mode is transmitted in an error-protected manner in a further additional information item (F2).

## Revendications

1. Procédé de transmission de signaux vocaux numérisés dont une première zone B1 est protégée contre les défauts et dont une seconde zone B2 est non protégée, par un canal vocal à fréquence de bits déterminée,
caractérisé en ce que
pour la transmission sélective de données numériques externes par le canal vocal, avant la transmission, toutes les données externes sont soumises à un premier code de protection contre les défauts (F), et une première partie de données (D1) protégée contre les défauts est munie d'un second code de protection supplémentaire dans la première zone (B1) tandis qu'une seconde partie de données (D2) protégée contre les défauts est munie d'un troisième code de protection supplémentaire et, dans la seconde zone (B2), à la place des signaux vocaux, on injecte des bits synchrones.

2. Procédé selon la revendication 1,
caractérisé en ce que
les données externes sont disponibles sous la forme de blocs de données, et le nombre des blocs de données par unité de temps est transmis sous la forme d'une information supplémentaire (F1) vers les données externes, de manière protégée contre les défauts.

3. Procédé selon la revendication 1 ou 2,
caractérisé en ce que
le mode de fonctionnement est transmis de manière protégée dans une autre information complémentaire (F2).
